# EUROPÄISCHE PATENTANMELDUNG

(11) **EP 3 144 109 A1**
(43) Veröffentlichungstag der Anmeldung: **22.03.2017**
(21) Anmeldenummer: 15186073.1
(22) Anmeldetag: 21.09.2015
(51) Int. Cl.: B25F 5/00, B25B 21/00, B25B 23/14, F16D 7/04, F16D 43/202

(54) **HANDWERKZEUGMASCHINE**

(71) Anmelder: HILTI Aktiengesellschaft, 9494 Schaan (LI)
(72) Erfinder: Hartmann, Markus, 87665 Mauerstetten (DE); Weber, Michael, 82223 Eichenau (DE); Ludwig, Manfred, 86899 Landsberg (DE)
(74) Vertreter: Hilti Aktiengesellschaft Corporate Intellectual Property

(57) **Zusammenfassung**

Eine erfindungsgemäße Handwerkzeugmaschine 1 hat einen Werkzeughalter 2 zum Haltern eines Werkzeugs, einen Elektromotor 3 und eine den Werkzeughalter 2 mit dem Elektromotor 3 koppelnde Rutschkupplung 7. Die Rutschkupplung 7 hat eine um eine Drehachse 15 drehbare Trommel 13, ein in der Trommel 13 um die Drehachse 15 drehbares Rad 12 und ein oder mehrere in radialer Richtung federbelastete, das Rad 12 an die Trommel 13 ankoppelnde Sperrkörper 14. Die Trommel 13 hat eine rohrförmige Innenfläche 20 mit mehreren zu einer Drehachse 15 hin vorstehenden Nocken 22. Das Rad 12 hat mehrere in Richtung zu der Lauffläche 20 geöffnete Taschen 18, in welche die Sperrkörper 14 lose eingelegt sind. Jeder Sperrkörper 14 hat zwei Gleitbereiche 29, die beide die Lauffläche 20 linienförmig berühren, und zwei Stützbereiche 25, 26, von denen in Abhängigkeit der Drehrichtung 17 des Rades 12 der jeweils vorauslaufende Stützbereich 25 beabstandet zu dem Rad 12 ist und der jeweils nachlaufende Stützbereich 26 das Rad 12 linienförmig berührt.

## Beschreibung

### GEBIET DER ERFINDUNG

Die vorliegende Erfindung betrifft eine Handwerkzeugmaschine mit einer Rutschkupplung. Insbesondere betrifft die Erfindung eine Handwerkzeugmaschine mit einem Links- und einem Rechtslauf.

### OFFENBARUNG DER ERFINDUNG

Die erfindungsgemäße Handwerkzeugmaschine hat einen Werkzeughalter zum Haltern eines Werkzeugs, einen Elektromotor und eine den Werkzeughalter mit dem Elektromotor koppelnde Rutschkupplung. Die Rutschkupplung hat eine um eine Drehachse drehbare Trommel, ein in der Trommel um die Drehachse drehbares Rad und ein oder mehrere in radialer Richtung federbelastete, das Rad an die Trommel ankoppelnde Sperrkörper. Die Trommel hat eine rohrförmige Innenfläche mit mehreren zu einer Drehachse hin vorstehenden Nocken. Das Rad hat in Richtung zu der Lauffläche geöffnete Taschen, in welche jeweils einer der Sperrkörper lose eingelegt ist. Jeder Sperrkörper hat zwei Gleitbereiche, die beide die Lauffläche linienförmig berühren, und zwei Stützbereiche, von denen in Abhängigkeit der Drehrichtung des Rades der jeweils vorauslaufende Stützbereich beabstandet zu dem Rad ist und der jeweils nachlaufende Stützbereich das Rad linienförmig berührt.

Der Sperrkörper ist lose eingelegt, d.h. nicht durch ein Lager, eine Führung, etc. in der Tasche fixiert. Der Sperrkörper hat wenigstens die Freiheitsgrade, welche in der Ebene senkrecht zu der Drehachse gegeben sind. Die Freiheitsgrade sind translatorische Bewegungen entlang zweier unterschiedlicher Achsen und eine Drehung um eine zu der Drehachse parallele Achse.

### KURZE BESCHREIBUNG DER FIGUREN

Die nachlaufende Beschreibung erläutert die Erfindung anhand von exemplarischen Ausführungsformen und Figuren. In den Figuren zeigen:
- Fig. 1: einen Elektroschrauber
- Fig. 2: einen Längsschnitt durch die Rutschkupplung
- Fig. 3: einen Querschnitt durch die Rutschkupplung in einer ersten Stellung des Rads
- Fig. 4: den Querschnitt durch die Rutschkupplung in einer zweiten Stellung des Rads
- Fig. 5: den Querschnitt durch die Rutschkupplung in einer dritten Stellung des Rads
- Fig. 6: eine Rutschkupplung

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

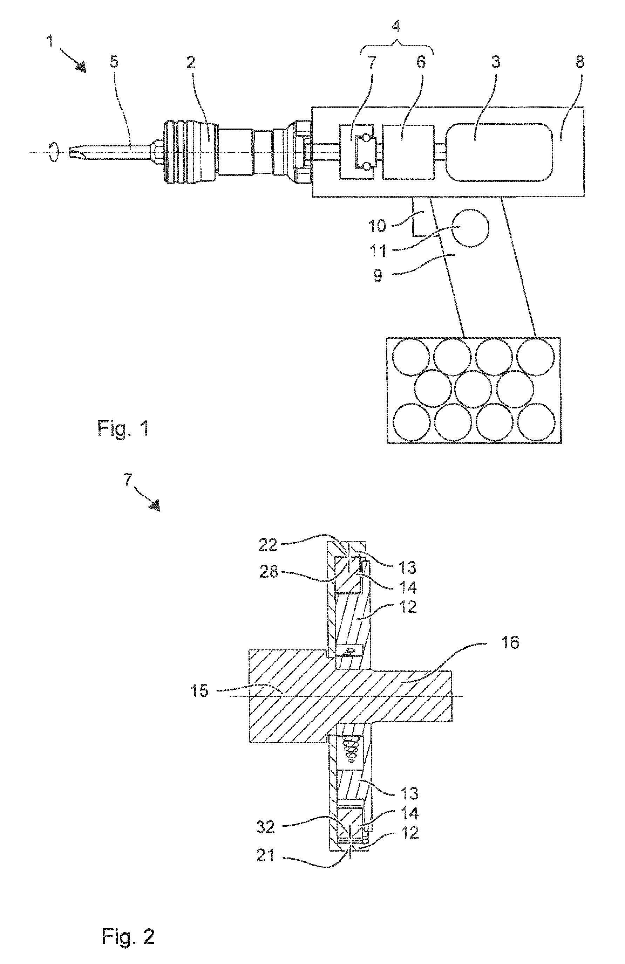

Fig. 1 zeigt als Beispiel einer Handwerkzeugmaschine schematisch einen Elektroschrauber **1.** Der Elektroschrauber **1** hat einen Werkzeughalter **2,** in welchen ein Werkzeug eingesetzt und verriegelt werden kann. Ein Elektromotor **3** ist über einen Antriebsstrang **4** mit dem Werkzeughalter **2** gekoppelt, um den Werkzeughalter **2** im Betrieb um eine Arbeitsachse **5** zu drehen. Der Antriebsstrang **4** enthält vorzugsweise ein Getriebe **6** zum Untersetzen der Drehzahl, beispielsweise ein schaltbares Getriebe **6.** Der Antriebsstrang **4** enthält ferner eine Rutschkupplung **7,** die ab einem kritischen Drehmoment eine Drehmomentübertragung zwischen dem Werkzeughalter **2** und dem Elektromotor **3** unterbricht. Der Elektromotor **3** und der Antriebsstrang **4** sind in einem Maschinengehäuse **8** angeordnet. Ein Handgriff **9** an dem Maschinengehäuse **8** ermöglicht dem Anwender den Elektroschrauber **1** während des Betriebs zu halten und zu führen. Der Anwender kann den Elektroschrauber mittels eines Betriebstasters **10,** vorzugsweise am Handgriff **9,** in Betrieb nehmen. Ansprechend auf ein Betätigen des Betriebstasters **10** wird der Elektromotor **3** mit Strom versorgt und dreht den Werkzeughalter **2.** Die Elektroschrauber **1** hat einen Wahlschalter **11,** um die Drehrichtung des Werkzeughalters **2** festzulegen, sprich zwischen Linkslauf und Rechtslauf zu wählen. Der Elektroschrauber **1** ist exemplarisch für andere Handwerkzeugmaschinen mit einem drehenden Werkzeug, wie einer Bohrmaschine, einem Bohrhammer, etc..

Die Rutschkupplung **7** hat ein inneres Rad **12,** eine äußere Trommel **13** und mehrere Sperrkörper **14.** Das innere Rad **12** und die äußere Trommel **13** sind a priori unabhängig um eine Drehachse **15** drehbar. Die Sperrkörper **14** vermitteln ein Drehmoment von dem Rad **12** auf die Trommel **13** und vice versa. Soweit die Sperrkörper **14** das Drehmoment vermitteln können, bewegen sich das Rad **12** und die Trommel **13** synchron. Überschreitet das zu vermittelnde Drehmoment ein maximal übertragbares Drehmoment, lösen sich die Sperrkörper **14** von der Trommel und das Rad **12** dreht sich relativ zu der Trommel **13.** Das maximal übertragbare Drehmoment kann den Elektroschrauber **1** und den Anwender vor exzessiven Belastungen schützen, beispielsweise wenn das Werkzeug blockiert.

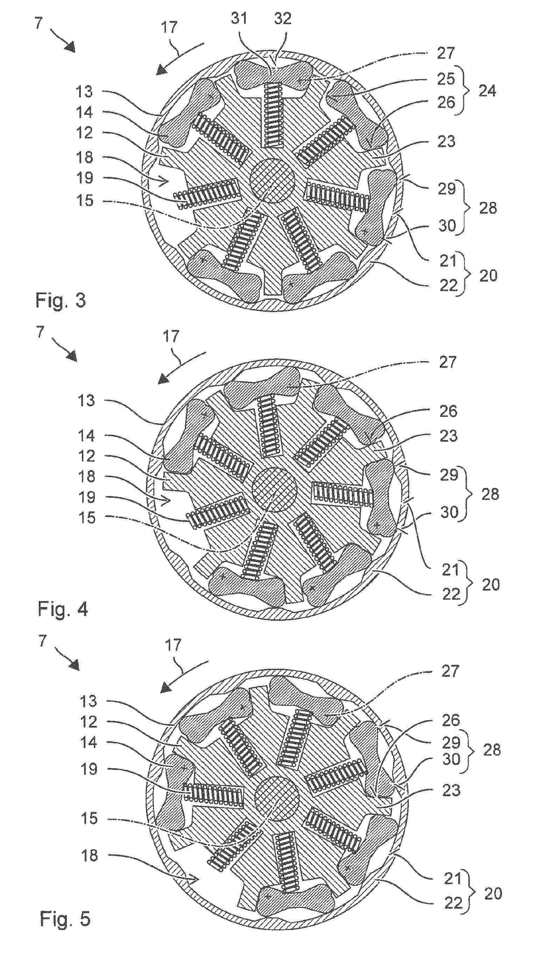

Der beispielhafte Aufbau der Rutschkupplung **7** ist in den Fig. 2 bis Fig. 5 illustriert. Das Rad **12** sitzt auf einer Antriebswelle **16,** die von dem Elektromotor **3** angetrieben ist. Der Elektromotor **3** treibt das Rad **12** an. Eine Drehrichtung **17** des Rades **12** hängt von der durch den Wahlschalter **11** vorgegebenen Drehrichtung **17** des Elektromotors ab. Fig. 3 gibt beispielhaft eine Drehrichtung **17** des Rades **12** zum Erläutern der Funktionsweise der Rutschkupplung **7** an, wenngleich sich das Rad **12** der Rutschkupplung **7** auch in die entgegengesetzte Richtung drehen kann.

Das Rad **12** hat entlang seines Umfangs mehrere Taschen **18.** In den Taschen **18** liegt jeweils ein Sperrkörper **14** (ein Sperrkörper ist zur Illustration der Tasche entfernt). Die Zahl der Taschen **18** und der Sperrkörper **14** ist im Wesentlichen abhängig von der Größe der Rutschkupplung **7** und dem maximal zu übertragendenden Drehmoment. Die beispielhafte Rutschkupplung **7** hat sieben Sperrkörper **14.** Vorzugsweise sind die Sperrkörper **14** und Taschen **18** gleichmäßig entlang des Umfangs des Rades **12** verteilt. Zu jedem Sperrkörper **14** ist eine Feder **19** in der Tasche **18** angeordnet. Die Feder **19** übt eine radial nach Außen wirkende Kraft auf den Sperrkörper **14** derart aus, dass der Sperrkörper **14** in radialer Richtung aus der Tasche **18** herausgehoben wird. Die Feder **19** ist beispielsweise eine Schraubenfeder. Die radiale Richtung bezieht sich auf die Drehachse **15** der Rutschkupplung **7.** Die Trommel **13** hat eine rohrförmige Innenfläche **20,** welche das Rad **12,** insbesondere die Taschen **18** und die Sperrkörper **14** ringförmig umschließt. Die Innenfläche **20** wird nachlaufend als Lauffläche **20,** d.h. als Lauffläche **20** für die Sperrkörper **14,** bezeichnet. Die Sperrkörper **14** liegen federbelastet durch die Federn **19** an der Lauffläche **20** an. Die Lauffläche **20** hat zylindrische Segmente **21** und gegenüber den zylindrischen Segmenten **21** in Richtung zu der Drehachse **15** vorspringende Nocken **22.** Die Nocken **22** sind vorzugsweise in gleichmäßigen Winkelabständen um die Drehachse **15** verteilt und deren Zahl entspricht vorzugsweise der Zahl der Sperrkörper **14.** Die Nocken **22** hemmen zusammen mit den Sperrkörpern **14** eine relative Drehbewegung des Rades **12** gegenüber der Trommel **13.** Die Hemmung bzw. das maximal übertragbare Drehmoment ist durch die Form der Nocken **22** und die Steifigkeit der Federn **19** vorgegeben.

Die Tasche **18** ist im Wesentlichen eine Aussparung in dem Rad **12,** welche durch einen Boden in Richtung zu der Drehachse **15** hin und seitliche Wände **23** entlang der Drehrichtung **17** begrenzt ist. Der Sperrkörper **14** liegt lose in der Tasche **18.** Der Sperrkörper **14** hat insbesondere in der Ebene senkrecht zu der Drehachse **15** einen rotatorischen Freiheitsgrad und zwei translatorische Freiheitsgrade, welche nicht durch ein Lager, eine Führung, etc. an dem Rad **12** oder der Trommel **13** unterbunden sind. Der Sperrkörpers **14** bzw. die Tasche **18** sind entlang der Drehrichtung **17** derart bemessen, dass der Sperrkörper **14** in der Tasche **18** translatorisch, entlang der Drehrichtung **17** beweglich ist. Der Sperrkörper **14** kann sich gegenüber dem Rad **12** um wenigstens mehrere Bogenminuten, vorzugsweise um mehr als 10 Bogenminuten, höchstens 300 Bogenminuten, um die Drehachse **15** bewegen. Der Sperrkörper **14** ist in der Tasche **18** in radialer Richtung translatorisch beweglich. Die radiale Abmessung des Sperrkörpers **14** und der radiale Abstand von der Lauffläche **20** zu der Tasche **18** sind entsprechend bemessen. Der Sperrkörper **14** könnte in der Tasche **18** so positioniert werden, dass der Sperrkörper **14** weder das Rad **12** noch die Trommel **13** berührt.

Der Sperrkörper **14** hat zwei Stützbereiche **24,** welche an den Wänden **23** des Rades **12** anliegen können. Die Stützbereiche **24** können durch Zylindersegmente gebildet sein. In Abhängigkeit der Drehrichtung **17** ist der eine Stützbereich **25** vorauslaufend und der andere Stützbereich **26** nachlaufend. Die Abmessung der Taschen **18** in Drehrichtung **17** ist derart bemessen, dass maximal einer der Stützbereiche **24** das Rad **12** kontaktiert, zumindest wenn der Sperrkörper **14** die Lauffläche **20** berührt. Typischerweise liegt beim sich drehenden Rad **12,** bedingt durch die wirkenden Kräfte, nur der nachlaufende Stützbereich **26** an dem Rad **12** an. Das Rad **12** schiebt den Sperrkörper **14** über den nachlaufenden Stützbereich **26** an. Das Rad **12** ist durch den nachlaufenden Stützbereich **26** linienförmig kontaktiert. Der Kontakt des nachlaufenden Stützbereichs **26** mit dem Rad **12** hat im Wesentlichen keine Ausdehnung in der Ebene senkrecht zu der Drehachse **15.** Die Linienform bezieht sich auf die Ausdehnung des Kontakts längs der Drehachse **15,** in den Schnitten von Fig. 3 und Fig. 5 ist der linienförmige Kontakt jeweils punktförmig.

Der Sperrkörper **14** rollt mit dem nachlaufenden Stützbereich **26** an der Wand **23** ab. Die Schwenkbewegung erfolgt um einen sogenannten Momentanpol **27,** dessen Position von der Stellung des Sperrkörpers **14** abhängt. Die Position des Momentanpols **27** ergibt sich aus der Krümmung des nachlaufenden Stützbereichs **26** an dem Kontakt mit der Wand **23.** Der Momentanpol **27** liegt auf dem Lot zu der durch den Kontakt laufenden Tangente und im Abstand des Krümmungsradius des nachlaufenden Stützbereichs **26** zu dem Kontakt. Ungleich einer durch von einem Lager vorgegebener fixer Drehachse oder Schwenkachse ändert sich die Position des Momentanpols **27.** Insbesondere bei einem Richtungswechsel der Drehrichtung **17,** wenn der vormals vorauslaufende Stützbereich **25** die gegenüberliegende Wand **23** kontaktiert, ändert sich die Position des Momentpols **27** sowohl bezogen auf das Rad **12** wie auch auf den Sperrkörper **14.**

Die lose Anordnung ermöglicht dem Sperrkörper **14** sich derart frei um den Momentanpol **27** zu drehen, dass der Sperrkörper **14** immer mit zwei Gleitbereichen **28** an der Innenfläche **20** der Trommel **13** anliegt. Die Gleitbereiche **28** können durch Zylindersegmente gebildet sein. Die beiden Gleitbereiche **28** sind zueinander in der Drehrichtung **17** voneinander beabstandet. Je nach Drehrichtung **17** des Rades **12** ist der eine Gleitbereich **29** vorauslaufend und der andere Gleitbereich **30** nachlaufend. Der Kontakt der Gleitbereiche **28** ist linienförmig, d.h. hat im Wesentlichen keine Ausdehnung in der Ebene senkrecht zu der Drehachse **15.** Die Linienform bezieht sich auf die Ausdehnung des Kontakts längs der Drehachse **15,** in den Schnitten von Fig. 3 und Fig. 5 sind die linienförmigen Kontakte jeweils punktförmig.

Sofern das zu vermittelnde Drehmoment geringer als das maximal übertragbare Drehmoment ist, liegen die beiden Gleitbereiche **28** an einem zylindrischen Segment **21** der Lauffläche **20** an (Fig. 3). Überschreitet das anliegende Drehmoment das maximal übertragbare Drehmoment gleitet zunächst der vorauslaufende Gleitbereich **29** über die ihm benachbarte Nocke **22** (Fig. 4) und nachlaufend gleitet der nachlaufende Gleitbereich **30** über diese Nocke **22** (Fig. 5). Die jeweiligen Abstände der beiden Gleitbereiche **28** zu der Drehachse **15** unterscheiden sich während dieser Gleitphase. Der nachlaufende Stützbereich **26** folgt der Bewegung des Sperrkörpers **14.** Während der vorauslaufende Gleitbereich **29** über die Nocke **22** gleitet (Fig. 4), rollt der nachlaufende Stützbereich **26** im Wesentlichen nur an der Wand **23** ab; hingegen während der nachlaufende Stützbereich **26** über die Nocke **22** gleitet (Fig. 5), verschiebt sich der Stützbereich **26** in radialer Richtung translatorisch entlang der Wand **23.** Der nachlaufende Stützbereich **26** führt somit sowohl eine Schwenkbewegung als auch eine Translationsbewegung aus, im Gegensatz zu einem festen Dreh- oder Schwenklager. Der Momentanpol **27** ändert seine Position in Bezug auf das Rad **12,** wenn die Rutschkupplung **7** auslöst. Bei dem beispielhaft kreiszylindrisch ausgebildeten Stützbereich **26** bleibt der Momentpol ortsfest in Bezug auf den Sperrkörper **14.**

Unabhängig von der Drehrichtung **17** des Rades **12** liegt der Sperrkörper **14** genau nur mit den zwei Gleitbereichen **28** an der Lauffläche **20** und genau nur mit einem der beiden Stützbereiche **25** an dem Rad **12** an. Ändert sich die Drehrichtung **17,** ändert sich welcher der beiden Stützbereiche **25** anliegt.

Der Sperrkörper **14** ist vorzugsweise spiegelsymmetrisch, wodurch der Sperrkörper **14** uniform in Drehrichtung **17** und entgegen der Drehrichtung **17** ist. Der beispielhaft dargestellte Sperrkörper **14** hat eine Schmetterling-ähnliche Form. Die Stützbereiche **24** und die Gleitbereiche **28** des Sperrkörpers **14** sind an den Ecken eines imaginären, vorzugsweise gleichschenkligen, Trapezes angeordnet. Die Stützbereiche **24** sind auf der ersten Grundlinie, die Gleitbereiche **28** auf der zweiten Grundlinie des Trapezes angeordnet. Die erste Grundlinie ist zweckmäßigerweise kürzer als die zweite Grundlinie, d.h. radial weiter außen liegenden Gleitbereiche **28** sind in Drehrichtung **17** weiter beabstandet, als die radial weiter innen liegenden Stützbereiche **24.**

Die Stützbereiche **24** und die Gleitbereiche **28** sind Zylindersegmente, beispielsweise Segmente eines Kreiszylinders, eines elliptischen Zylinders oder ovalen Zylinders. Die Außenflächen der Stützbereiche **24** und der Gleitbereiche **28** sind durchgehend glatt und konvex gebogen, um einen linienförmigen Kontakt mit den Wänden **23** bzw. der Lauffläche **20** für jede Stellung des Sperrkörpers **14** zu gewährleisten.

Die Gleitbereiche **28** sind durch einen Rumpf **31** voneinander beabstandet. Der Rumpf **31** hat eine der Lauffläche **20** zugewandte konkave Dachfläche **32.** Die Dachfläche **32** ist zwischen den Gleitbereichen **28** soweit eingewölbt, dass wenn nur die Gleitbereiche **28** und in keiner Stellung des Sperrkörpers **14** die Dachfläche **32** die Nocke **22** berühren. Insbesondere ist die Dachfläche derart gewölbt, dass wenn die Nocke **22** und die Dachfläche **32** einander gegenüberliegen, ein diese trennender, sich über die gesamte Abmessung der Nocke **22** erstreckender Spalt vorhanden.

Die Taschen **18** haben beispielsweise einen trapezförmigen Querschnitt. Der Taschen **18** werden vorzugsweise in Richtung zu der Lauffläche **20** weiter. Eine Neigung der seitlichen Wände **23** der Taschen **18** liegt beispielsweise in einem Bereich zwischen 40 Grad und 60 Grad.

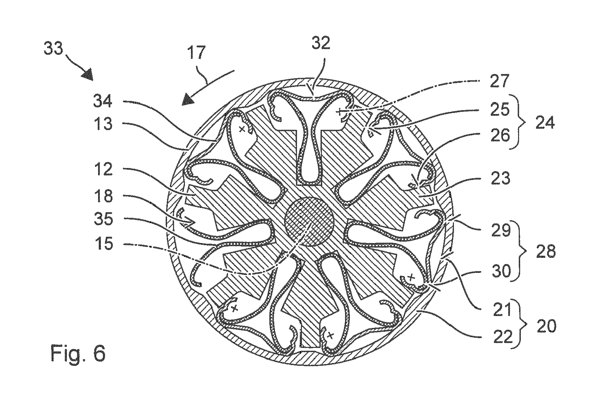

Fig. 6 zeigt eine weitere Ausgestaltung der Rutschkupplung **33.** Die Rutschkupplung **33** hat ein Rad **12,** eine Trommel **13,** und Sperrkörper **34.** Das Rad **12** und die Trommel **13** sind gleich wie in der vorherigen Ausführungsform und werden daher nicht weiter beschrieben. Die Sperrkörper **34** sind als Blechstreifen ausgebildet. Die Wandstärke des Sperrkörpers **34** liegt beispielsweise zwischen 1 mm und 3 mm. Der Blechstreifen bildet die Stützbereiche **25** und die Gleitbereiche **28.** Vorzugsweise bildet der Blechstreifen die konkave Dachfläche **32,** welche die beiden Gleitbereiche **28** verbindet. Für die Beschreibung der Form und Funktion der Stützbereiche **25,** der Gleitbereiche **28** und der konkaven Dachfläche **32** wird auf das vorhergehende Ausführungsbeispiel verwiesen.

Die Feder kann als Blattfeder **35** ausgebildet sein. Die Blattfeder **35** ist gefaltet. Ein mittlerer Abschnitt der Blattfeder **35** ist in dem Rad **12** eingeklemmt. Die beiden freien Enden sind in Drehrichtung **17** bzw. entgegen der Drehrichtung **17** aufgebogen. Die Enden liegen an dem Sperrkörper **14** unmittelbar gegenüber den Gleitbereichen **28** an. Die Enden sind letztlich nur durch die Wandstärke des Sperrkörpers **14** von der Lauffläche **20** getrennt.

## Patentansprüche

1. Handwerkzeugmaschine (1) mit einem Werkzeughalter (2) zum Haltern eines Werkzeugs, einem Elektromotor (3), einer den Werkzeughalter (2) mit dem Elektromotor (3) koppelnde Rutschkupplung (7), die eine um eine Drehachse (15) drehbare Trommel (13), ein in der Trommel (13) um die Drehachse (15) drehbares Rad (12) und in radialer Richtung federbelastete, wenigstens einen das Rad (12) an die Trommel (13) ankoppelnde Sperrkörper (14) aufweist,
wobei die Trommel (13) eine rohrförmige Innenfläche (20) mit zu einer Drehachse (15) hin vorstehenden Nocken (22) aufweist,
wobei das Rad (12) in Richtung zu der Lauffläche (20) geöffnete Taschen (18), in welche jeweils einer der Sperrkörper (14) lose eingelegt ist, aufweist,
wobei jeder der Sperrkörper (14) zwei Gleitbereiche (29) und zwei Stützbereiche (25, 26) aufweist, die beiden Gleitbereiche (29) die Lauffläche (20) linienförmig berührend sind und von den zwei Stützbereichen (25, 26) in Abhängigkeit der Drehrichtung (17) des Rades (12) der jeweils in Drehrichtung (17) vorauslaufende Stützbereich (25) beabstandet zu dem Rad (12) ist und der jeweils in Drehrichtung (17) nachlaufende Stützbereich (26) das Rad (12) linienförmig berührend ist.

2. Handwerkzeugmaschine nach Anspruch 1, **dadurch gekennzeichnet, dass** der Sperrkörper (14) entlang der Drehrichtung (17) translatorisch beweglich ist.

3. Handwerkzeugmaschine nach Anspruch 1 oder 2, **dadurch gekennzeichnet, dass** der Sperrkörper (14) in radialer Richtung translatorisch beweglich ist.

4. Handwerkzeugmaschine (1) nach einem der vorhergehenden Ansprüche, **dadurch gekennzeichnet, dass** die Gleitbereiche (28) zylindrisch ausgebildet sind.

5. Handwerkzeugmaschine (1) nach einem der vorhergehenden Ansprüche, **dadurch gekennzeichnet, dass** die Stützbereiche (24) zylindrisch ausgebildet sind.

6. Handwerkzeugmaschine (1) nach einem der vorhergehenden Ansprüche, **dadurch gekennzeichnet, dass** der Sperrkörper (14) in und entgegen der Drehrichtung (17) uniform gestaltet ist.

7. Handwerkzeugmaschine nach Anspruch 1, **dadurch gekennzeichnet, dass** die Gleitbereiche (28) durch eine konkave Dachfläche (32) in Drehrichtung (17) voneinander beabstandet sind.

8. Handwerkzeugmaschine nach Anspruch 1, **dadurch kennzeichnet, dass** die Tasche (18) zwei radial verlaufende Wände (23) aufweist und der nachlaufende Stützbereich (26) an der Wand (23) anliegt.

9. Handwerkzeugmaschine (1) nach einem der vorhergehenden Ansprüche, **dadurch kennzeichnet, dass** jeweils eine Feder (19) den Sperrkörper (14) in radialer Richtung gegen die Lauffläche (20) andrückt.

10. Handwerkzeugmaschine (1) nach Anspruch 9, **dadurch kennzeichnet, dass** die Feder (35) eine gebogene Blattfeder ist.
